# EUROPEAN PATENT SPECIFICATION

(11) **EP 3 683 422 B1**
(45) Date of publication and mention of the grant of the patent: **29.06.2022**
(21) Application number: 20152213.3
(22) Date of filing: 16.01.2020
(51) Int. Cl.: F02C 6/18, F01K 23/10, F01K 25/10, F02C 7/18

(54) **WORK RECOVERY SYSTEM FOR A GAS TURBINE ENGINE UTILIZING AN OVEREXPANDED, RECUPERATED SUPERCRITICAL CO2 CYCLE DRIVEN BY COOLING AIR WASTE HEAT**
ARBEITSRÜCKGEWINNUNGSSYSTEM FÜR EINEN GASTURBINENMOTOR UNTER VERWENDUNG EINES ÜBEREXPANDIERTEN, ÜBERKRITISCHEN CO2 BRAYTON ZYKLUS, DER DURCH DIE ABWÄRME DER KÜHLLUFT ANGETRIEBEN WIRD
SYSTÈME DE RÉCUPÉRATION DE TRAVAIL POUR UN MOTEUR À TURBINE À GAZ UTILISANT UN CYCLE BRAYTON DE CO2 SUPERCRITIQUE, DE DÉTENTE ACCRU , ENTRAÎNÉ PAR LA CHALEUR RÉSIDUELLE DE L'AIR DE REFROIDISSEMENT

(30) Priority: 16.01.2019 US 201916248942
(43) Date of publication of application: 22.07.2020
(73) Proprietor: Raytheon Technologies Corporation, Farmington, CT 06032 (US)
(72) Inventor: McAULIFFE, Brendan T., West Hartford, Connecticut 06119 (US); STAUBACH, Joseph B., Colchester, Connecticut 06415 (US); SOMANATH, Nagendra, South Windsor, Connecticut 06074 (US)
(74) Representative: Dehns

(56) References cited:
- US-A1- 2012 067 055
- US-A1- 2017 152 765
- MARCHIONNI MATTEO ET AL: "Techno-economic assessment of Joule-Brayton cycle architectures for heat to power conversion from high-grade heat sources using CO2in the supercritical state", ENERGY, ELSEVIER, AMSTERDAM, NL, vol. 148, 4 February 2018 (2018-02-04), pages 1140-1152, XP085361812, ISSN: 0360-5442, DOI: 10.1016/J.ENERGY.2018.02.005
- KIM MIN SEOK ET AL: "Study on the supercritical CO2power cycles for landfill gas firing gas turbine bottoming cycle", ENERGY, ELSEVIER, AMSTERDAM, NL, vol. 111, 17 June 2016 (2016-06-17), pages 893-909, XP029721633, ISSN: 0360-5442, DOI: 10.1016/J.ENERGY.2016.06.014
- YOONHAN AHN ET AL: "Review of supercritical CO2 power cycle technology and current status of research and development", NUCLEAR ENGINEERING AND TECHNOLOGY, vol. 47, no. 6, 1 October 2015 (2015-10-01), pages 647-661, XP055694583, KP ISSN: 1738-5733, DOI: 10.1016/j.net.2015.06.009

## Description

### TECHNICAL FIELD

The present disclosure relates generally to a system for recovering waste heat in a gas turbine engine, and more specifically to a work recovery system utilizing a supercritical CO2 cycle to recover work from excess heat.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

The compression process of the gas turbine engine results in a rise in the temperature of the gas at the compressor exit due to increasing pressure and component inefficiencies. At certain elevated pressures, this compressed air becomes too hot to be used for the purposes of turbine cooling and must be itself cooled. The waste heat that is generated from this cooled cooling air is imparted to the exhaust flow and expelled without providing additional work. Waste heat is one of the primary sources of loss (inefficiency) in any thermodynamic cycle, and minimization of waste heat in an engine therefore increases the efficiency of the engine.

US 2012/067055 A1 discloses a prior art gas turbine engine as set forth in the preamble of claim 1.

### SUMMARY OF THE INVENTION

In one aspect, there is provided a gas turbine engine as recited in claim 1.

There is also provided a method as recited in claim 11.

Features of embodiments are set forth in the dependent claims.

These and other features of the present invention can be best understood from the following specification and drawings, the following of which is a brief description.

### BRIEF DESCRIPTION OF THE DRAWINGS

Figure 1 illustrates a high level schematic view of an exemplary gas turbine engine.
Figure 2 schematically illustrates a gas turbine engine including a cooled cooling air driven overexpanding, recuperating supercritical CO2 cycle.
Figure 3 illustrates a recuperating supercritical CO2 cycle diagram.

### DETAILED DESCRIPTION

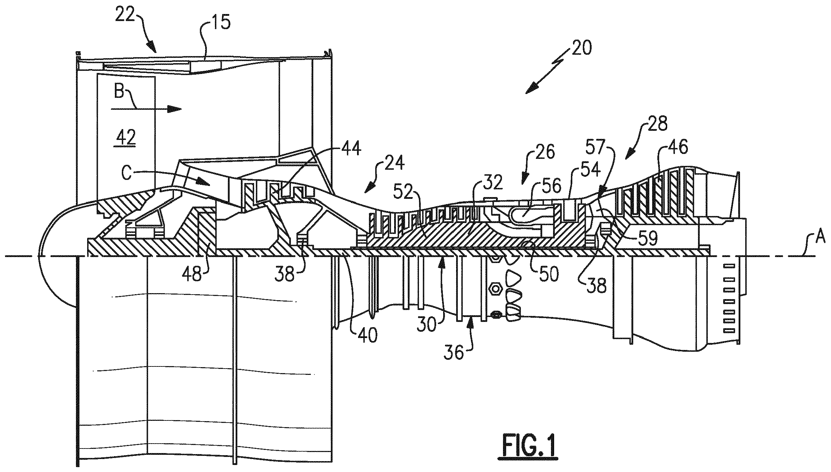

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including single spool or three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including turbojets or direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5} (where °R = K x 9/5). The "Low corrected fan tip speed" as disclosed herein according to one non-limiting embodiment is less than about 1150 ft / second (350.5 meters/second).

Existing gas turbine engines, such as the exemplary geared turbofan engine of Figure 1, generate substantial amounts of heat that is exhausted from the turbine section 28 into a surrounding atmosphere. The exhaust heat represents wasted energy, and is a large source of inefficiency in the gas turbine engines.

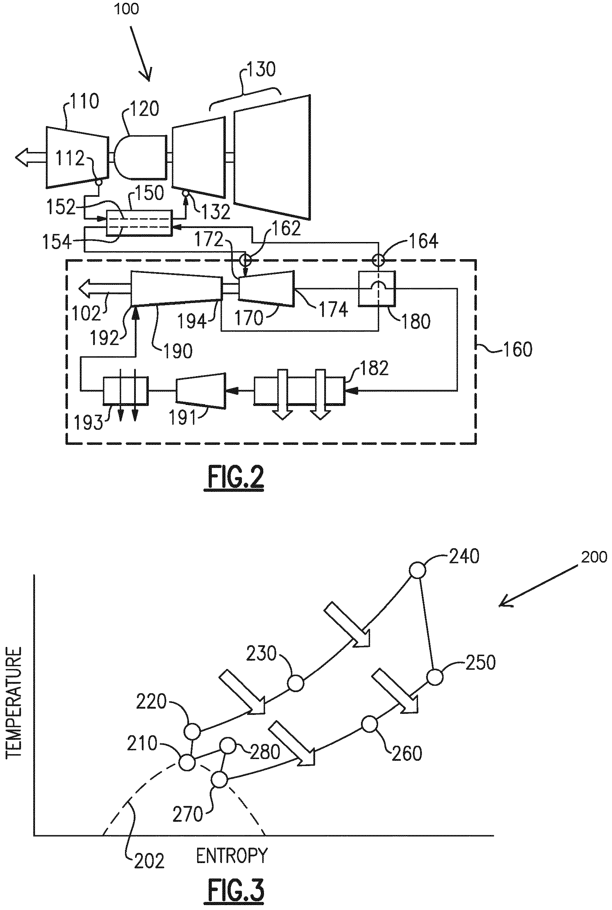

With continued reference to Figure 1, Figure 2 schematically illustrates a gas turbine engine 100, including a compressor section 110, a combustor section 120 and a turbine section 130, all of which are connected via a primary fluid flowpath. Existing designs for maximum high pressure gas turbine engines expel excess heat from cooling turbine cooling air the ambient atmosphere, without using the excess heat to generate additional shaft work.

In order to recapture the waste heat within the turbine engine system 100 of Figure 2 and convert the waste heat to work, a heat exchanger 150 is connected to a compressor bleed 112 and a turbine inlet 132. The heat exchanger 150 provides a flowpath 152 that connects the bleed 112 to the inlet 132, and bypasses the combustor 120. In one example, the compressor bleed 112 is at or downstream of an aft most compressor stage and the turbine inlet 132 is at or upstream of the upstream most turbine stage. The heat extracted from flowpath 152 enables the air at turbine inlet 132 to be at an appropriate pressure and temperature to be used to cool turbine 130. The heat exchanger 150 extracts heat from the compressor 110 flow and provides it to a waste heat recovery system 160 which in turn uses the waste heat to generate work and provide the generated work to one or more engine system within the gas turbine engine. The heat exchanger 150 includes a first fluid pathway (referred to as the hot passage) that connects the compressor bleed 112 to the turbine inlet 132, and a second fluid passageway 154 (referred to as the cold fluid passageway) that connects an inlet 162 and an outlet 164 of the waste heat recovery system 160.

Within the heat exchanger 150 heat is transferred from the first fluid pathway 152 to the second fluid pathway 154, and the second fluid pathway 154 is connected to a supercritical CO2 (sCO2) Brayton cycle (referred to herein as the waste heat recovery system 160). The waste heat recovery system 160 converts the heat into rotational work which is provided to at least one additional engine system. The waste heat recovery system 160 recuperates waste heat within the recovery system 160 and expands the sCO2 working fluid below the supercritical pressure during the working cycle and is referred to as an overexpanded recuperating work recovery cycle.

Included within the waste heat recovery system 160 is a turbine 170 with an inlet 172 connected to an output of the heat exchanger 150. The turbine 170 expands the heated working fluid and expels the heated working fluid through a turbine outlet 174. The turbine 170 expands the working fluid beyond an expansion that would place the working fluid back at, or just above, the supercritical point immediately prior to the beginning of the working fluid cycle. This expansion is referred to as overexpansion. As a result of the overexpansion, a secondary compressor 191 (alternately referred to as an overexpansion compressor) and a second heat rejection heat exchanger 193 are included within the working cycle to return the working fluid (sCO2) to the pressure and temperature required to achieve the supercritical state at the beginning of the working cycle.

The expelled working fluid is passed through a relatively hot passage of a recuperating heat exchanger 180, and is passed to a relatively hot passage of a first heat rejection heat exchanger 182. After passing through the heat rejection heat exchanger 182, the working fluid is passed to the overexpansion compressor 191 and the second heat rejection heat exchanger 193. The working fluid is then passed to an inlet 192 of a compressor 190 (alternately referred to as a working fluid compressor 190). The compressor 190 compresses the working fluid, and passes the compressed working fluid from a compressor outlet 194 to a cold passage of the recuperating heat exchanger 180. In practical terms the state of the inlet 192 of the working fluid compressor is referred to as the start of the working fluid cycle.

During operation of the waste heat recovery system 160, the compressor 190 compresses the working fluid, and passes the compressed working fluid through the recuperating heat exchanger 180 and the heat exchanger 150, causing the compressed working fluid to be heated in each of the heat exchangers 150, 180. The heated working fluid is provided to the inlet 172 of the turbine 170 and expanded through the turbine 170, driving the turbine 170 to rotate. As described above, the turbine 170 overexpands the working fluid beyond a point that would return the working fluid to the state of the working fluid at the beginning of the cycle. The rotation of the turbine 170 drives rotation of the compressor 190, overexpansion compressor 191 and of an output shaft 102. The output shaft 102 is mechanically connected to one, or more, additional turbine engine systems and provides work to those systems using any conventional means for transmitting rotational work. Additionally, the rotational work can be converted into electricity and used to power one or more engine or aircraft systems. By way of example, the means for transmitting rotational work can include a drive shaft, a gear system, an electrical generator and distribution system, or any similar structure.

In the illustrated example, the working fluid is a CO2 fluid, and is maintained at or above a supercritical point throughout the entirety of the working cycle. Due to being maintained at or above the supercritical point, the system 160 is referred to as a supercritical CO2 cycle (sCO2 cycle). With continued reference to Figure 2, Figure 3 illustrates a chart 200 showing a state of the working fluid throughout a working cycle of the waste heat recovery system 160 as a temperature with respect to entropy. Initially, the working fluid starts at or above a peak of a vapor dome 202 at point 210. The vapor dome 202 represents an upper boundary above which the working fluid is at the corresponding supercritical point. The starting point 210 is the state of the working fluid at the inlet of the compressor 190, prior to the working fluid undergoing compression by the compressor 190.

The working fluid is compressed in the compressor 190, causing the temperature and pressure of the working fluid to increase, while also imparting a minimal increase in the entropy of the working fluid until the working fluid is expelled from the compressor 190. Point 220 of the chart 200 represents the state of the working fluid at the compressor outlet 194. After exiting the compressor 190, the working fluid is passed through the recuperating heat exchanger 180, where the temperature and entropy of the working fluid are increased until an outlet of the recuperating heat exchanger 180 illustrated at point 230.

The outlet of the recuperating heat exchanger 180 is provided to the heat exchanger 150, across which the entropy and temperature of the working fluid are again increased until a point 240. The point 240 represents the state of the working fluid at the outlet of the heat exchanger 150 and at the inlet 172 of the turbine 170, and is the peak temperature and entropy of the working fluid in the cycle. As power is extracted from the working fluid in the turbine 170, the temperature and pressure drops. The pressure is reduced below the level of the start of the cycle (point 210) and needs to be compressed back up to the pressure at point 210. The overexpansion in the turbine allows for additional work extraction compared to expanding to the pressure of the start of the cycle (point 210). After work has been extracted by the turbine 170, the overexpanded working fluid is provided to the recuperating heat exchanger 180 and a portion of the excess heat is transferred from the expanded working fluid to working fluid between points 220 and 230 of the cycle 200. The state of the working fluid at the outlet of the recuperating heat exchanger 180, and the inlet of the heat rejection heat exchanger 182 is illustrated at point 260.

In order to optimize operations of the sCO2 waste heat recovery system 160, the system 160 uses the heat rejection heat exchanger 182 to return the state of the working fluid to as close to the starting point 210 as possible. Due to the overexpansion of the turbine 170, the pressure of the working fluid at the heat rejection heat exchanger 182 outlet (point 270) is lower than required to maintain the working fluid at a supercritical point at the start of the working fluid cycle. To address this, the working fluid is pressurized in the secondary compressor 191. The pressurization results in a pressure and temperature of the working fluid at the outlet (point 280) of the secondary compressor 191 being above that which is required to maintain the supercritical state of the working fluid. A secondary heat rejection heat exchanger 193 is used to dump waste heat in a similar manner as the first heat rejection heat exchanger 182, and returns the working fluid to the inlet of the working fluid compressor 190. The waste heat can be dumped into any number of heat sinks within the gas turbine engine including, but not limited to, fan duct air, ram air, fuel, and a transcritical CO2 refrigeration cycle. The multiple stages of compression with heat rejection in between creates an intercooled compression that increases the bottoming cycle efficiency.

In the illustrated example of Figure 3, the starting point of the cycle 200 is immediately at the vapor dome 202. In practical examples, the starting point can be targeted at slightly above the vapor dome in order to prevent minor variations during operation and other practical considerations from causing the working fluid to fall below the vapor dome 202.

While described above in conjunction with a geared turbofan engine, it is appreciated that the waste heat recovery system described herein can be utilized in conjunction with any other type of turbine engine including a cooled cooling air system with only minor modifications that are achievable by one of skill in the art.

The cooled cooling air system enables a main engine architecture that drives to high pressures by reducing the temperature of the turbine cooling air. The system described herein recovers some work from the cooled cooling air system that is normally dumped into a heat sink.

Additionally, the mass flow of the CO2 in the system described above, and therefore all the component volumes, are sized specifically to provide the amount of cooling required to reduce the temperature of the turbine cooling air. The bleed turbine air will be on the order of 5% of core flow.

A further benefit of this system is that due to the high density and heat capacity of supercritical CO2, a higher level of compaction can be achieved relative to comparable air systems for cooled cooling air. This is significant for weight and engine integration.

Although an embodiment of this invention has been disclosed, a worker of ordinary skill in this art would recognize that certain modifications would come within the scope of this disclosure. For that reason, the following claims should be studied to determine the true scope of the invention.

## Claims

1. A gas turbine engine (20; 100) comprising:
a primary flowpath (C) fluidly connecting a compressor section (24; 110), a combustor section (26; 110), and a turbine section (28; 130); and
a heat exchanger (150) including a first inlet connected to a high pressure compressor bleed (112), a first outlet connected to a high pressure turbine inlet (132),
the heat exchanger (150) further including a second inlet fluidly connected to a supercritical CO2 (sCO2) work recovery cycle (160) and a second outlet connected to the sCO2 work recovery cycle (160),
**characterised in that**:
the sCO2 work recovery cycle is an overexpanded, recuperated work recovery cycle; and
the heat exchanger (150) is disposed in the primary flowpath (C) of the gas turbine engine (20; 100) and is aft of the turbine section (28; 130).

2. The gas turbine engine (20; 100) of claim 1, wherein the high pressure compressor bleed (112) is disposed at an outlet of the compressor section (24; 110) of the gas turbine engine (20; 100).

3. The gas turbine engine (20; 100) of claim 1 or 2, wherein the turbine inlet (132) is upstream of a first turbine stage.

4. The gas turbine engine (20; 100) of any preceding claim, wherein the sCO2 work recovery cycle (160) comprises a turbine (170) having a working fluid turbine inlet (172) connected to the second outlet of the heat exchanger (150) and a spent working fluid turbine outlet (174) connected to an overexpansion compressor inlet of an overexpansion compressor (191), the overexpansion compressor (191) having an overexpansion compressor outlet connected to a working fluid compressor inlet (192) of a working fluid compressor (190), the working fluid compressor (190) further including a working fluid compressor outlet (194) connected to the second inlet of the heat exchanger (150).

5. The gas turbine engine (20; 100) of claim 4, further comprising a recuperator heat exchanger (180) including a first flowpath connecting the working fluid compressor outlet (194) to the second inlet of the heat exchanger (150), and , optionally, a second flowpath connecting the working fluid turbine outlet (174) to the overexpansion compressor inlet.

6. The gas turbine engine of claim 4 or 5, further comprising a first heat rejection heat exchanger (193) connecting an outlet of the overexpansion compressor (191) to an inlet (192) of the working fluid compressor (190) and wherein the working fluid turbine outlet (174) is connected to the overexpansion compressor inlet via a second heat rejection heat exchanger (182).

7. The gas turbine engine (20; 100) of any of claims 4 to 6, wherein a fluid pressure at the working fluid compressor inlet (192) is at least a supercritical pressure of a working fluid in the working fluid work recovery cycle (160) during standard operations, and wherein a pressure of the working fluid at the overexpansion compressor inlet is below a supercritical pressure of the working fluid at the inlet (192) of the working fluid compressor (190).

8. The gas turbine engine (20; 100) of claim 7, wherein during standard operations, a fluid pressure and temperature at the working fluid compressor inlet (192) is the supercritical pressure and temperature of the working fluid in the sCO2 work recovery cycle (160), allowing sufficient margin such for fluid property and operational fluctuations such that the compressor inlet fluid is not located within a vapor dome (202).

9. The gas turbine engine (20; 100) of any preceding claim, wherein the overexpanded work recovery cycle (160) includes a mechanical output (102), and wherein the mechanical output (102) is configured to transmit rotational work from the overexpanded work recovery cycle (160) to at least one other engine system, and includes, for example, at least one of a drive shaft, a gear system, an electrical generator and distribution system.

10. The gas turbine engine (20; 100) of any preceding claim, wherein the sCO2 work recovery cycle (160) contains a CO2 fluid and the CO2 fluid is maintained at at least a supercritical point throughout an entirety of the sCO2 cycle.

11. A method for recovering work from waste heat in a high pressure compressor bleed (112) in a gas turbine engine (20; 100) comprising:
heating a supercritical CO2 (sCO2) working fluid in a heat exchanger (150) using a heating flowpath, the heating flowpath connecting a gas turbine engine compressor bleed (112) to a gas turbine engine turbine stage inlet (132);
providing the heated sCO2 working fluid to a waste recovery turbine (170);
expanding the heated sCO2 working fluid across the waste recovery turbine (170), thereby driving the waste recovery turbine (170) to rotate;
providing sCO2 working fluid from an outlet (174) of the waste recovery turbine (170) to an inlet of an overexpansion compressor (191) and compressing the sCO2 working fluid;
providing the sCO2 working fluid from an outlet of the overexpansion compressor (191) to an inlet (192) of a work recovery compressor (190) through a first heat rejection heat exchanger (193);
providing the compressed sCO2 working fluid to an inlet (172) of the waste recovery turbine (170) from the work recovery compressor (190); and
maintaining the sCO2 working fluid above a supercritical point through an entirety of a working cycle,
wherein the heat exchanger (150) is disposed in a primary flowpath (C) of a gas turbine engine (20; 100) and is aft of a turbine section (28; 130) of the gas turbine engine (20; 100).

12. The method of claim 11, further comprising passing the sCO2 working fluid from the outlet (174) of the waste recovery turbine (170) through a recuperator heat exchanger (180), and passing the sCO2 working fluid from the work recovery compressor (190) through the recuperator heat exchanger (180) prior to providing the sCO2 working fluid from the work recovery compressor (190) to the heat exchanger (150) thereby transferring heat from the sCO2 working fluid exiting the turbine (170) to the sCO2 working fluid entering the heat exchanger (150).

13. The method of claim 11 or 12, wherein providing sCO2 working fluid from the outlet (174) of the waste recovery turbine (170) to the inlet of the overexpansion compressor (191) comprises passing the sCO2 working fluid through a second heat rejection heat exchanger (182), thereby dumping waste heat to a heat sink, for example, at least one of fan duct air, ram air, fuel, and a transcritical CO2 refrigeration cycle.

14. The method of claim 11, 12 or 13, wherein providing the sCO2 working fluid from the outlet (174) of the waste recovery turbine (170) to the inlet of the overexpansion compressor (191) comprises reducing a temperature and pressure of the sCO2 working fluid to below a minimum supercritical temperature and pressure of the working fluid at the work recovery compressor inlet (192).

15. The method of any of claims 11 to 14, wherein expanding the heated sCO2 working fluid across the waste recovery turbine (170), thereby driving the waste recovery turbine (170) to rotate further comprises transmitting rotational work from the waste recovery turbine (170) to at least one engine system in the gas turbine engine (20; 100).

## Patentansprüche

1. Gasturbinenmotor (20; 100), umfassend:
einen primären Strömungsweg (C), der einen Kompressorabschnitt (24; 110), einen Brennkammerabschnitt (26; 110) und einen Turbinenabschnitt (28; 130) fluidisch verbindet; und
einen Wärmetauscher (150) mit einem ersten Einlass, der mit einer Hochdruckkompressorabzweigung (112) verbunden ist, einem ersten Auslass, der mit einem Hochdruckturbineneinlass (132) verbunden ist,
wobei der Wärmetauscher (150) ferner einen zweiten Einlass, der in Fluidverbindung mit einem überkritischen CO2(sCO2)-Arbeitsrückgewinnungskreislauf (160) steht, und einen zweiten Auslass, der mit dem sCO2-Arbeitsrückgewinnungskreislauf (160) verbunden ist, aufweist,
**dadurch gekennzeichnet, dass**:
der sCO2-Arbeitsrückgewinnungskreislauf ein überexpandierter, wiederhergestellter Arbeitsrückgewinnungskreislauf ist; und
der Wärmetauscher (150) in dem primären Strömungweg (C) des Gasturbinenmotors (20; 100) angeordnet ist und sich hinter dem Turbinenabschnitt (28; 130) befindet.

2. Gasturbinenmotor (20; 100) nach Anspruch 1, wobei die Hochdruckkompressorabzweigung (112) an einem Auslass des Kompressorabschnitts (24; 110) des Gasturbinenmotors (20; 100) angeordnet ist.

3. Gasturbinenmotor (20; 100) nach Anspruch 1 oder 2, wobei der Turbineneinlass (132) einer ersten Turbinenstufe vorgeschaltet ist.

4. Gasturbinenmotor (20; 100) nach einem der vorhergehenden Ansprüche, wobei der sCO2-Arbeitsrückgewinnungskreislauf (160) eine Turbine (170) umfasst, die einen Arbeitsfluid-Turbineneinlass (172), der mit dem zweiten Auslass des Wärmetauschers (150) verbunden ist, und einen Turbinenauslass (174) für verbrauchtes Arbeitsfluid, der mit einem Überexpansionskompressoreinlass eines Überexpansionskompressors (191) verbunden ist, aufweist, wobei der Überexpansionskompressor (191) einen Überexpansionskompressorauslass aufweist, der mit einem Arbeitsfluidkompressoreinlass (192) eines Arbeitsfluidkompressors (190) verbunden ist, wobei der Arbeitsfluidkompressor (190) ferner einen Arbeitsfluidkompressorauslass (194) aufweist, der mit dem zweiten Einlass des Wärmetauschers (150) verbunden ist.

5. Gasturbinenmotor (20; 100) nach Anspruch 4, ferner umfassend einen Rekuperator-Wärmetauscher (180) mit einem ersten Strömungsweg, der den Arbeitsfluidkompressorauslass (194) mit dem zweiten Einlass des Wärmetauschers (150) verbindet, und optional einem zweiten Strömungsweg, der den Arbeitsfluidturbinenauslass (174) mit dem Überexpansionskompressoreinlass verbindet.

6. Gasturbinenmotor nach Anspruch 4 oder 5, ferner umfassend einen ersten Wärmeabgabe-Wärmetauscher (193), der einen Auslass des Überexpansionskompressors (191) mit einem Einlass (192) des Arbeitsfluidkompressors (190) verbindet, und wobei der Arbeitsfluid-Turbinenauslass (174) mit dem Überexpansionskompressoreinlass über einen zweiten Wärmeabgabe-Wärmetauscher (182) verbunden ist.

7. Gasturbinenmotor (20; 100) nach einem der Ansprüche 4 bis 6, wobei ein Fluiddruck an dem Arbeitsfluidkompressoreinlass (192) zumindest ein überkritischer Druck eines Arbeitsfluids in dem Arbeitsfluid-Arbeitsrückgewinnungskreislauf (160) während Standardbetrieben ist und wobei ein Druck des Arbeitsfluids an dem Überexpansionskompressoreinlass unterhalb eines überkritischen Drucks des Arbeitsfluids an dem Einlass (192) des Arbeitsfluidkompressors (190) liegt.

8. Gasturbinenmotor (20; 100) nach Anspruch 7, wobei während Standardbetrieben ein Fluiddruck und eine Fluidtemperatur an dem Arbeitsfluidkompressoreinlass (192) der überkritische Druck und die überkritische Temperatur des Arbeitsfluids in dem sCO2-Arbeitsrückgewinnungskreislauf (160) sind, was einen ausreichenden Spielraum für Fluideigenschaften und Betriebsschwankungen ermöglicht, so dass sich das Kompressoreinlassfluid nicht innerhalb einer Dampfkuppel (202) befindet.

9. Gasturbinenmotor (20; 100) nach einem der vorhergehenden Ansprüche, wobei der Rückgewinnungskreislauf (160) für überexpandierte Arbeit einen mechanischen Ausgang (102) aufweist und wobei der mechanische Ausgang (102) konfiguriert ist, Rotationsarbeit von dem Rückgewinnungskreislauf (160) für überexpandierte Arbeit zu mindestens einem anderen Motorsystem zu übertragen, und zum Beispiel mindestens eine Antriebswelle und/oder ein Getriebesystem und/oder einen elektrischen Generator und/oder ein Verteilungssystem aufweist.

10. Gasturbinenmotor (20; 100) nach einem der vorhergehenden Ansprüche, wobei der sCO2-Arbeitsrückgewinnungskreislauf (160) ein CO2-Fluid enthält und das CO2-Fluid während des gesamten sCO2-Kreislaufs auf mindestens einem überkritischen Punkt gehalten wird.

11. Verfahren zum Rückgewinnen von Arbeit aus Abwärme in einer Hochdruckkompressorabzweigung (112) in einem Gasturbinenmotor (20; 100), umfassend:
Erwärmen eines überkritischen CO2(sCO2)-Arbeitsfluids in einem Wärmetauscher (150) unter Verwendung eines Heizströmungswegs, wobei der Heizströmungsweg eine Gasturbinenmotor-Kompressorabzweigung (112) mit einem Gasturbinenmotor-Turbinenstufeneinlass (132) verbindet;
Bereitstellen des erwärmten sCO2-Arbeitsfluids für eine Abwärmerückgewinnungsturbine (170);
Expandieren des erwärmten sCO2-Arbeitsfluids über die Abwärmerückgewinnungsturbine (170), wodurch die Abwärmerückgewinnungsturbine (170) zum Rotieren angetrieben wird;
Bereitstellen von sCO2-Arbeitsfluid von einem Auslass (174) der Abwärmerückgewinnungsturbine (170) zu einem Einlass eines Überexpansionskompressors (191) und Verdichten des sCO2-Arbeitsfluids;
Bereitstellen des sCO2-Arbeitsfluids von einem Auslass des Überexpansionskompressors (191) zu einem Einlass (192) eines Arbeitsrückgewinnungskompressors (190) durch einen ersten Wärmeabgabe-Wärmetauscher (193);
Bereitstellen des verdichteten sCO2-Arbeitsfluids zu einem Einlass (172) der Abwärmerückgewinnungsturbine (170) von dem Arbeitsrückgewinnungskompressor (190); und
Halten des sCO2-Arbeitsfluids über einem überkritischen Punkt während eines gesamten Arbeitskreislaufs,
wobei der Wärmetauscher (150) in einem primären Strömungsweg (C) eines Gasturbinenmotors (20; 100) angeordnet ist und sich hinter einem Turbinenabschnitt (28; 130) des Gasturbinenmotors (20; 100) befindet.

12. Verfahren nach Anspruch 11, ferner umfassend das Leiten des sCO2-Arbeitsfluids von dem Auslass (174) der Abwärmerückgewinnungsturbine (170) durch einen Rekuperator-Wärmetauscher (180) und das Leiten des sCO2-Arbeitsfluids von dem Arbeitsrückgewinnungskompressor (190) durch den Rekuperator-Wärmetauscher (180), bevor das sCO2-Arbeitsfluid von dem Arbeitsrückgewinnungskompressor (190) dem Wärmetauscher (150) bereitgestellt wird, wodurch Wärme von dem die Turbine (170) verlassenden sCO2-Arbeitsfluid auf das in den Wärmetauscher (150) eintretende sCO2-Arbeitsfluid übertragen wird.

13. Verfahren nach Anspruch 11 oder 12, wobei das Bereitstellen von sCO2-Arbeitsfluid von dem Auslass (174) der Abwärmerückgewinnungsturbine (170) zu dem Einlass des Überexpansionskompressors (191) das Leiten des sCO2-Arbeitsfluids durch einen zweiten Wärmeabgabe-Wärmetauscher (182) umfasst, wodurch Abwärme an eine Wärmesenke abgegeben wird, beispielsweise mindestens Bläserkanalluft und/oder Stauluft und/oder Kraftstoff und/oder ein transkritischer CO2-Kältekreislauf.

14. Verfahren nach Anspruch 11, 12 oder 13, wobei das Bereitstellen des sCO2-Arbeitsfluids von dem Auslass (174) der Abwärmerückgewinnungsturbine (170) zu dem Einlass des Überexpansionskompressors (191) das Reduzieren einer Temperatur und eines Drucks des sCO2-Arbeitsfluids auf unter eine minimale überkritische Temperatur und einen minimalen überkritischen Druck des Arbeitsfluids an dem Arbeitsrückgewinnungskompressoreinlass (192) umfasst.

15. Verfahren nach einem der Ansprüche 11 bis 14, wobei das Expandieren des erwärmten sCO2-Arbeitsfluids über die Abwärmerückgewinnungsturbine (170) und dadurch Antreiben der Abwärmerückgewinnungsturbine (170) zum Rotieren ferner das Übertragen von Rotationsarbeit von der Abwärmerückgewinnungsturbine (170) zu mindestens einem Motorsystem in dem Gasturbinenmotor (20; 100) umfasst.

## Revendications

1. Moteur à turbine à gaz (20 ; 100) comprenant :
un circuit primaire (C) reliant fluidiquement une section de compresseur (24 ; 110), une section de chambre de combustion (26 ; 110) et une section de turbine (28 ; 130) ; et
un échangeur de chaleur (150) comportant une première entrée reliée à une purge haute pression du compresseur (112), une première sortie reliée à une entrée haute pression de la turbine (132),
l'échangeur de chaleur (150) comportant en outre une seconde entrée reliée fluidiquement à un cycle Brayton (160) de récupération de travail de CO2 supercritique (sCO2) et une seconde sortie reliée au cycle Brayton (160) de récupération de travail de sCO2,
**caractérisé en ce que** :
le cycle Brayton de récupération de travail de sCO2 est un cycle Brayton de récupération de travail, de détente accru et récupéré ; et
l'échangeur de chaleur (150) est disposé dans le circuit primaire (C) du moteur à turbine à gaz (20 ; 100) et se trouve à l'arrière de la section de turbine (28 ; 130).

2. Moteur à turbine à gaz (20 ; 100) selon la revendication 1, dans lequel la purge de compresseur haute pression (112) est disposée à une sortie de la section de compresseur (24 ; 110) du moteur à turbine à gaz (20 ; 100).

3. Moteur à turbine à gaz (20 ; 100) selon la revendication 1 ou 2, dans lequel l'entrée de turbine (132) se trouve en amont d'un premier étage de turbine.

4. Moteur à turbine à gaz (20 ; 100) selon une quelconque revendication précédente, dans lequel le cycle Brayton de récupération de travail de sCO2 (160) comprend une turbine (170) ayant une entrée de turbine de fluide de travail (172) reliée à la seconde sortie de l'échangeur de chaleur (150) et une sortie de turbine de fluide de travail usé (174) reliée à une entrée de compresseur de surdétente d'un compresseur de surdétente (191), le compresseur de surdétente (191) ayant une sortie de compresseur de surdétente reliée à une entrée de compresseur de fluide de travail (192) d'un compresseur de fluide de travail (190), le compresseur de fluide de travail (190) comportant en outre une sortie de compresseur de fluide de travail (194) reliée à la seconde entrée de l'échangeur de chaleur (150).

5. Moteur à turbine à gaz (20 ; 100) selon la revendication 4, comprenant en outre un échangeur de chaleur (180) de récupérateur comportant un premier circuit reliant la sortie (194) du compresseur de fluide de travail à la seconde entrée de l'échangeur de chaleur (150), et, éventuellement, un second circuit reliant la sortie (174) de la turbine de fluide de travail à l'entrée du compresseur de surdétente.

6. Moteur à turbine à gaz selon la revendication 4 ou 5, comprenant en outre un premier échangeur de chaleur (193) à rejet de chaleur reliant une sortie du compresseur de surdétente (191) à une entrée (192) du compresseur (190) de fluide de travail et dans lequel la sortie (174) de la turbine à fluide de travail est reliée à l'entrée du compresseur de surdétente par l'intermédiaire d'un second échangeur de chaleur (182) à rejet de chaleur.

7. Moteur à turbine à gaz (20 ; 100) selon l'une quelconque des revendications 4 à 6, dans lequel une pression de fluide à l'entrée (192) du compresseur de fluide de travail est au moins une pression supercritique d'un fluide de travail dans le cycle Brayton (160) de récupération de travail du fluide de travail pendant les opérations standard, et dans lequel une pression du fluide de travail à l'entrée du compresseur de surdétente est inférieure à une pression supercritique du fluide de travail à l'entrée (192) du compresseur de fluide de travail (190).

8. Moteur à turbine à gaz (20 ; 100) selon la revendication 7, dans lequel pendant les opérations standard, une pression et une température de fluide à l'entrée (192) du compresseur de fluide de travail sont la pression et la température supercritiques du fluide de travail dans le cycle Brayton (160) de récupération de travail de sCO2, laissant une marge suffisante pour la propriété du fluide et les fluctuations de fonctionnement de sorte que le fluide d'entrée du compresseur ne soit pas situé à l'intérieur d'un dôme de vapeur (202).

9. Moteur à turbine à gaz (20 ; 100) selon une quelconque revendication précédente, dans lequel le cycle Brayton (160) de récupération de travail de détente accru comporte une sortie mécanique (102), et dans lequel la sortie mécanique (102) est configurée pour transmettre un travail de rotation à partir du cycle Brayton (160) de récupération de travail de détente accru à au moins un autre système de moteur, et comporte, par exemple, au moins un des éléments suivants : un arbre d'entraînement, un système d'engrenage, un générateur électrique ou un système de distribution.

10. Moteur à turbine à gaz (20 ; 100) selon une quelconque revendication précédente, dans lequel le cycle Brayton (160) de récupération de travail de sCO2 contient un fluide de CO2 et le fluide de CO2 est maintenu à au moins un point supercritique pendant la totalité du cycle de sCO2.

11. Procédé de récupération de travail à partir de la chaleur perdue dans une purge (112) de compresseur haute pression dans un moteur à turbine à gaz (20 ; 100) comprenant :
le chauffage d'un fluide de travail de CO2 supercritique (sCO2) dans un échangeur de chaleur (150) à l'aide d'un circuit de chauffe, le circuit de chauffe reliant une purge (112) de compresseur de moteur à turbine à gaz à une entrée (132) d'étage de turbine de moteur à turbine à gaz ;
la fourniture du fluide de travail de sCO2 chauffé à une turbine (170) de récupération des déchets ;
la dilatation du fluide de travail de sCO2 chauffé à travers la turbine (170) de récupération des déchets, entraînant ainsi la rotation de la turbine (170) de récupération des déchets ;
la fourniture d'un fluide de travail de sCO2 d'une sortie (174) de la turbine (170) de récupération des déchets à une entrée d'un compresseur de surdétente (191) et la compression du fluide de travail de sCO2 ;
la fourniture du fluide de travail de sCO2 d'une sortie du compresseur de surdétente (191) à une entrée (192) d'un compresseur (190) de récupération de travail à travers un premier échangeur de chaleur (193) à rejet de chaleur ;
la fourniture du fluide de travail de sCO2 comprimé à une entrée (172) de la turbine (170) de récupération des déchets à partir du compresseur (190) de récupération de travail ; et
le maintien du fluide de travail de sCO2 au-dessus d'un point supercritique pendant la totalité d'un cycle de travail,
dans lequel l'échangeur de chaleur (150) est disposé dans un circuit primaire (C) d'un moteur à turbine à gaz (20 ; 100) et se trouve à l'arrière d'une section de turbine (28 ; 130) du moteur à turbine à gaz (20 ; 100).

12. Procédé selon la revendication 11, comprenant en outre le passage du fluide de travail de sCO2 de la sortie (174) de la turbine (170) de récupération des déchets à travers un échangeur de chaleur (180) de récupérateur, et le passage du fluide de travail de sCO2 du compresseur (190) de récupération de travail à travers l'échangeur de chaleur (180) du récupérateur avant de fournir le fluide de travail de sCO2 du compresseur (190) de récupération de travail à l'échangeur de chaleur (150) transférant ainsi la chaleur du fluide de travail de sCO2 sortant de la turbine (170) au fluide de travail de sCO2 entrant l'échangeur de chaleur (150).

13. Procédé selon la revendication 11 ou 12, dans lequel la fourniture de fluide de travail sCO2 de la sortie (174) de la turbine (170) de récupération des déchets à l'entrée du compresseur de surdétente (191) comprend le passage du fluide de travail sCO2 à travers un second échangeur de chaleur (182) à rejet de chaleur, évacuant ainsi la chaleur résiduelle vers un dissipateur thermique, par exemple, au moins un parmi de l'air du conduit de ventilateur, de l'air dynamique, du carburant et un cycle de réfrigération au CO2 transcritique.

14. Procédé selon la revendication 11, 12 ou 13, dans lequel la fourniture du fluide de travail de sCO2 de la sortie (174) de la turbine (170) de récupération des déchets à l'entrée du compresseur de surdétente (191) comprend la réduction d'une température et d'une pression du fluide de travail de sCO2 en dessous d'une température et d'une pression supercritiques minimales du fluide de travail à l'entrée (192) du compresseur de récupération de travail.

15. Procédé selon l'une quelconque des revendications 11 à 14, dans lequel la dilatation du fluide de travail de sCO2 chauffé à travers la turbine (170) de récupération des déchets, entraînant ainsi la rotation de la turbine (170) de récupération des déchets comprend en outre la transmission du travail de rotation de la turbine (170) de récupération des déchets à au moins un système de moteur dans le moteur à turbine à gaz (20 ; 100) .
